# EUROPEAN PATENT SPECIFICATION

(11) **EP 1 736 750 B1**
(45) Date of publication and mention of the grant of the patent: **04.02.2009**
(21) Application number: 05425447.9
(22) Date of filing: 21.06.2005
(51) Int. Cl.: G01J 3/28, G02B 27/10

(54) **Optoelectronic device for generating a plurality of spectral images of an object on a common sensor**
Optoelektronisches Gerät zur Erzeugung mehrerer Bilder in verschiedenen Spektralbereichen auf einem gemeinsamen Sensor
Appareil optoélectronique pour former plusieurs images spectrales sur un capteur commun

(43) Date of publication of application: 27.12.2006
(73) Proprietor: Galileo Avionica S.p.A., 50013 Campi Bisenzio (Firenze) (IT)
(72) Inventor: Romoli, Andrea, 50132 Firenze (IT)
(74) Representative: Mannucci, Michele

(56) References cited:
- EP-A- 1 367 373
- EP-A- 1 387 154
- FR-A- 2 733 060
- US-A- 4 746 798
- US-A- 5 225 893
- US-A- 5 982 497

## Description

### Technical field

The present invention relates a device for generating spectral images in wavelength bands different from one another of an object by means of optional collection optics of an input beam of electromagnetic radiation, an input optical path with a plurality of band separator elements, which from the input beam generate a plurality of beams separated into respective spectral bands, and a plurality of optical paths for the separated bands, arranged along which are respective focusing optics of the separated bands on optoelectronic sensors.

Devices of this type are used in a plurality of applications, such as for meteorological observations, or to detect fires or the like both from land and from satellite.

### Background of the invention

Normally, spectral images are generated both in bands in the visible range and in bands in the near and far infrared. Optoelectronic sensors have different physical and constructional characteristics according to the wavelength range in which the image is to be generated. Sensors in the infrared range are particularly complex, cumbersome and costly, as they must be kept at low temperature for the sensors to be able to detect the images.

Normally, each optoelectronic sensor has one or more sensing elements arranged, for example, in a matrix or in an array. The various sensing elements are utilized to generate an image at a specific frequency band.

When images are to be generated in a high number of spectral bands the cost of the device is considerable, above all due to the incidence of the cost of the optoelectronic sensors in the infrared and far infrared range, in view of the need to cool each sensor individually.

US-A-5,225,893 discloses a two-color focal plane array sensor arrangement, wherein an incoming collimated beam is guided along a common optical path including in sequence: a first and a second converging lens; a wedged beamsplitter, having non-parallel reflective surfaces, in order to divide the beam into two separated beams, each following the same path across a third converging lens arranged in front of a dual sensor.

A similar arrangement is disclosed in US-A-4,746,798.

FR-A-2,733,060 discloses a two-band optical system including a common converging lens for the incoming beam and a common converging lens at the output end of the system. Between the two converging lenses a first and a second beam splitter are arranged. The first beam splitter splits the incoming beam into two separated beams. A first beam passes through the first and the second beam splitter and directly exits the device through the output converging lens. The second beam is reflected by the first beam splitter towards a separate path, along which two diverging lenses are arranged. Downstream the two diverging lenses the second beam is reflected by the second beam splitter towards the output converging lens. Different focal lengths are thus provided for the two separated beams and images with different enlargement rations are generated on a common detector.

US-A-5,982,497 discloses a multi-spectral two-dimensional imaging spectrometer, wherein a beam enters the optical device through a converging optics. A beam splitter separates the incoming beam into two separated beams. The separated beams pass through respective filters and are directed towards separate portions of a common converging lens at the output side of the optical path, said converging lens being arranged in front of a detector.

EP-A-1,367,373 discloses a multi-screen spectroscopic imaging device wherein an incoming beam crosses an objective lens and is divided into two separate beams by a fiber optic plate. The two separated converging beams move along respective separated paths through respective filter elements and are reflected on a combining optical element, from which the two beams emerge in a common exit path.

EP-A-1,387,154 discloses a broadband spectrometer wherein a beam is directed through a first disperser and a second disperser and the dispersed beam is focused by a focusing mirror on a detector.

### Objects and summary of the invention

The object of the present invention is to produce an optoelectronic device of the aforesaid type, which has reduced costs, and optionally reduced dimensions, which is nonetheless able to generate a plurality of images in different spectral bands.

This object is obtained with a device as claimed in claim 1.

In substance, the invention is based on the idea of conveying at least two of the separated beams (obtained from the input beam) along a portion of the common path to converge on a same optoelectronic sensor and preferably on different sensing elements of a same optoelectronic sensor. This is particularly advantageous in the case of optoelectronic sensors in the infrared. In fact, in this way, with a single cooling system of the single sensor it is possible to generate two or more images in two or more different spectral bands, reducing the costs and overall dimensions of the device as a whole.

In general, the two separated beams can be obtained by dividing a single input beam, received for example from a collection optics, into individual spectral bands, for example by means of band separator elements composed of dichroic mirrors or the like. Hereinafter reference will be specifically made to a solution of this type, in which an input beam is collected by a telescope and divided into separated beams by band separators in the form of dichroic mirrors. Nonetheless, the invention can also be applied generating the separated beams by exploiting different portions of the overall section of the input beam and filtering each portion by means of a separator element which in this case is composed of a bandpass filter. In substance, in the first case each of the separated beams generated by the various separator elements has a cross section equal to the section of the beam collected by the collection optics and contains the frequency contribution defined by the separator element. On the contrary, in the second case the individual separated beams have a cross section corresponding to a portion of the cross section of the input beam and the spectral contribution of each separated beam is defined by means of the bandpass filter.

Therefore, in general within the scope of the present description and of the appended claims, separator element is intended as any element which from a single input beam generates a separated beam in a specific range of wavelengths. Therefore, several separator elements generate, from a single input beam a plurality of separated beams, which are distinguished from one another by the different range of wavelengths of the radiation contained therein, it being understood that each beam can be obtained by filtering the entire input beam (using dichroic filters), or instead from a portion of the cross section of the beam. In this case, a number of portions of the cross section generate a corresponding number of separated beams.

According to an advantageous embodiment of the invention, the common sensor associated with the beams, which are combined with one another to be sent to said sensor comprises a plurality of sensing elements and the beams in the various wavelength bands are focused on different sensing elements for the different beams. For example, sensing elements can be provided in the same number as the number of separated beams, conveyed on the same sensor. However, it would also be possible for each of the separated beams conveyed on the same sensor to be provided with a matrix or an array of sensing elements.

Although the greatest advantages are obtained using the concept on which the invention is based applied to optoelectronic sensors in the infrared, it would also be possible to use the same configuration for sensors in the visible or near infrared range.

According to an advantageous embodiment, the output pupils of the separated beams converging on a same common sensor and coming from the respective focusing optics lie on a same input plane of the common sensor. When the sensor is an infrared sensor, this input plane is represented by the cold shield of said sensor.

For example, a common focusing optical element, which receives the beams conveyed towards the common sensor, is advantageously associated with each common sensor. Upstream of this common focusing optical element, a combining optical element can be arranged, which receives two or more separated beams and combines them sending them along a common length of optical path towards said common focusing optical element.

According to a possible embodiment, the combining optical element has a plurality of distinct surface portions, incident on each of which is one of the separated beams combined by the combining element to be sent to the common sensor.

The combining optical element can be an element which does not have dioptric power, i.e. which only changes the direction of the input beams received, utilizing for example flat reflecting surfaces. However, it would also be possible for the combining optical element to have dioptric power, for example as a converging or diverging element. In this case, according to an advantageous embodiment, it will preferably be a reflecting element, comprising, for example, distinct reflecting portions for the individual separated beams it receives, surfaces which have an adequate curvature to add their dioptric power to that of the remaining optical components arranged along the path of the beams.

In an advantageous embodiment, the combining optical element is adjustable to adjust the position of the output pupils of the separated beams reflected by the combining optical element towards the common sensor.

Focusing optics of each of the separated beams conveyed on the combining optical element can advantageously be arranged upstream of the combining optical element. These focusing optics can include dioptric elements, i.e. lenses which work in transmission, or reflecting elements, typically converging and diverging mirrors.

According to a possible embodiment, the input beam to each of said focusing optics upstream of the combining optical element is a collimated beam, which allows the use of high efficiency bandpass filters operating in parallel rather than converging rays. In fact, especially in the infrared, the high apertures required do not allow high efficiency bandpass filters to be produced directly on the sensing elements of the sensor.

Further advantageous features and embodiments of the device according to the invention are indicated in the appended claims and are described in greater detail hereunder with reference to examples of embodiment of the invention.

### Brief description of the drawings

The invention will be better understood by following the description and accompanying drawing, which shows non-limiting practical embodiments of the invention. In particular in the drawing:
Figure 1 shows a simplified diagram of the optical paths inside a device according to the invention;
Figure 2 shows the diagram of the combining optics of two beams in different spectral bands on a common sensor;
Figure 3 shows an alternative embodiment of the combining and focusing optics of the beams on a common sensor;
Figure 4 shows a configuration of the optics for combining four separated beams on a same sensor; and
Figure 5 shows a simplified diagram of the optical paths inside a device according to the invention in a different type of application.

### Detailed description of preferred embodiments of the invention

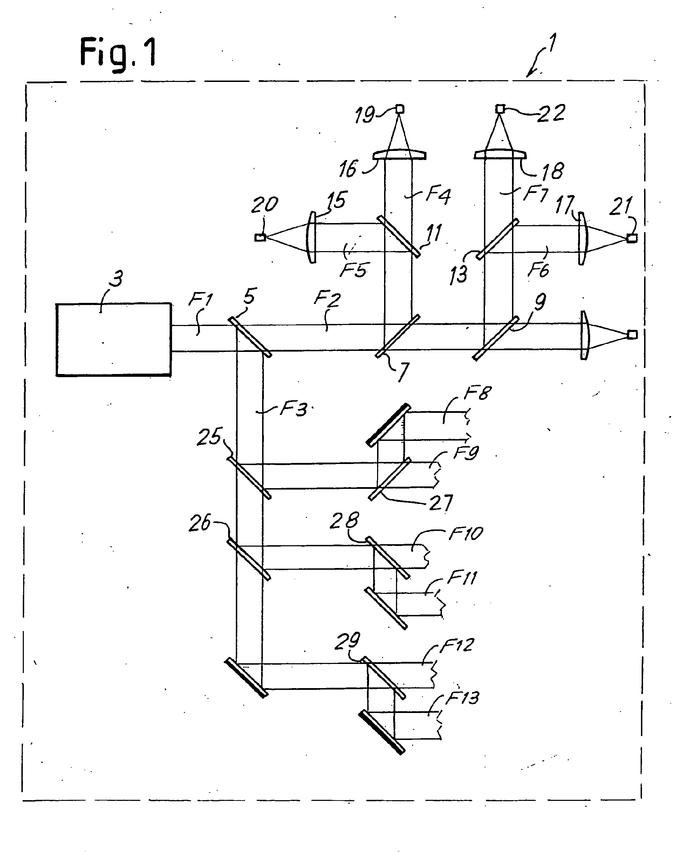

Figure 1 shows a schematic representation of the optical path of the input beam to a device, indicated as a whole with 1, incorporating the present invention. The beam coming from the object being observed by means of the device enters a telescope 3. The conveyed beam sent to the telescope can be collected by a scanning system with one or more scanning mirrors. The arrangement of the input optics is known per se and does not require particular descriptions herein. At the output of the telescope 3 is a collimated beam F1, which is divided in the manner described hereunder into a plurality of separated beams, each containing the radiations coming from the object observed in a particular range or band of wavelengths. The various bands can also have overlapping areas.

In order to divide the input beam F1 into single beams in the different spectral bands, a plurality of band separator elements are provided, which in a practical embodiment can be composed of dichroic mirrors. A first band separator element is composed in this embodiment of a dichroic mirror 5 which divides the input beam F1 into a beam F2 containing radiation in the visible and the near infrared range and into a beam F3 containing radiation in the infrared or far infrared band. The beam F2 is further divided by subsequent band separator elements in the form of dichroic mirrors 7, 9, 11 and 13 into four distinct separated beams F4, F5, F6 and F7. The four separated beams F4-F7 are focused by means of focusing optics 15, 16, 17 and 18 on four distinct sensors 19, 20, 21 and 22. The sensors 19-22 are sensors in the visible or near infrared band and therefore do not normally need cooling systems, and their sensing elements work at ambient temperature.

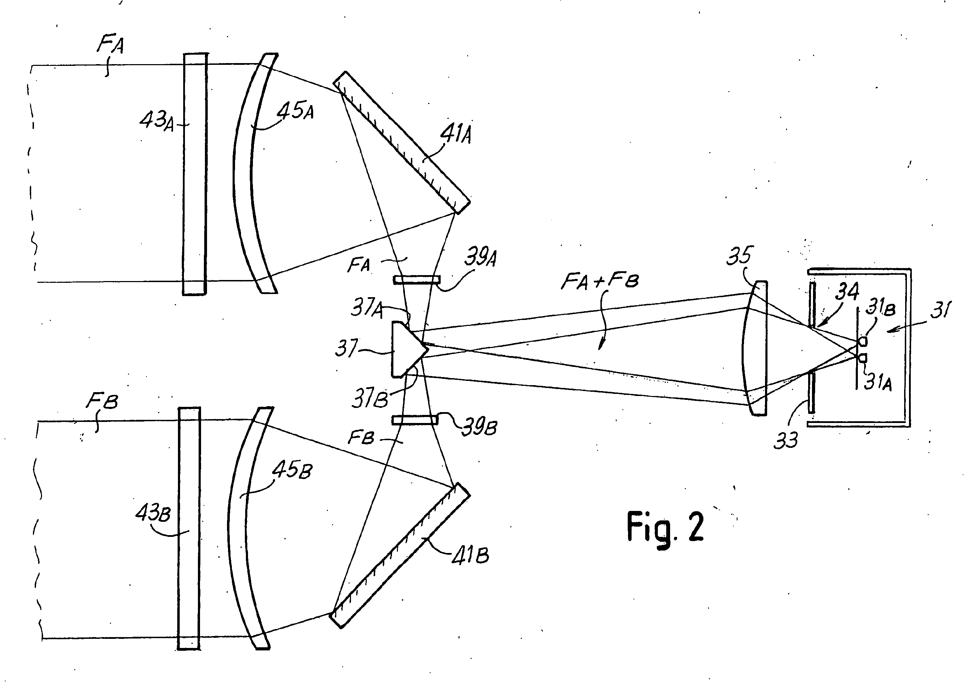

The beam F3 in the spectral band of the infrared is divided by means of separator elements or dichroic mirrors 25, 26, 27, 28 and 29 into six separated beams F8, F9, F10, F11, F12 and F13. These beams are distributed in pairs, F8, F9; F10, F11 and F12, F13. Each pair of separated beams is conveyed and focused on a respective common infrared sensor, with an arrangement of optical components of the type described in greater detail hereunder with reference to the subsequent Figures 2 to 4. The optics relative to the three pairs of beams are conceptually the same as one another and therefore the arrangement described hereunder can be utilized for each of the three pairs.

In the diagram in Figure 2 the number 31 indicates a sensor which has two sensing elements 31A and 31 B on which two separated beams are focused, which by means of the optics described hereunder are conveyed along a common path towards the same sensor 31. The sensor 31 is, in this case, a sensor in the infrared band and therefore has a cold shield 33 with an input aperture of the beams focused on the sensing elements of the sensor 31A, 31 B. In front of the aperture indicated with 34 produced in the cold shield 33 is a common focusing optical element, schematically represented by a converging lens 35, which receives two separated beams which must be focused on the two sensing areas or elements 31A and 31B. The two beams are conveyed towards the lens 35 by a combining optical element 37 constituted in this embodiment by a "roof" mirror, i.e. by a dihedral having two reflecting outer surfaces.

Arranged in front of the two reflecting surfaces, indicated with 37A and 37B, of the combining optical element 37 are diverging elements, represented in this example by lenses 39A and 39B which receive two separated beams, indicated generically here with F_{A} and F_{B}, which have been reflected by two flat folding mirrors 41A and 41 B. Upstream of the combining optical element 37 the two beams F_{A}, F_{B} have taken two different optical paths, while downstream of the optical element 37 the two beams F_{A}, F_{B} follow a common optical path to pass through the common focusing optical element 35 and reach, through the aperture 34 in the cold shield 33, the two sensing elements 31A and 31 B of the sensor 31.

Before reaching the respective flat folding mirrors 41A, 41 B the separated beams F_{A}, F_{B} pass through a bandpass filter 43A, 43B and a focusing optics 45A, 45B represented in this example by two converging lenses.

Arrangement of the various optical elements or components is such that the output pupil of the two beams F_{A}, F_{B} is at the level of the aperture 34, i.e. on the plane of the cold shield 33 of the sensor 31. This is obtained thanks to the combining optical element 37, which is adequately adjustable to take the two separated beams F_{A} and F_{B} to this particular condition. The beams, which are indicated with F_{A} and F_{B} in Figure 2, can be composed of the beams of one or other of the pairs of beams F8, F9 or F10, F11, or by F12, F13 in Figure 1.

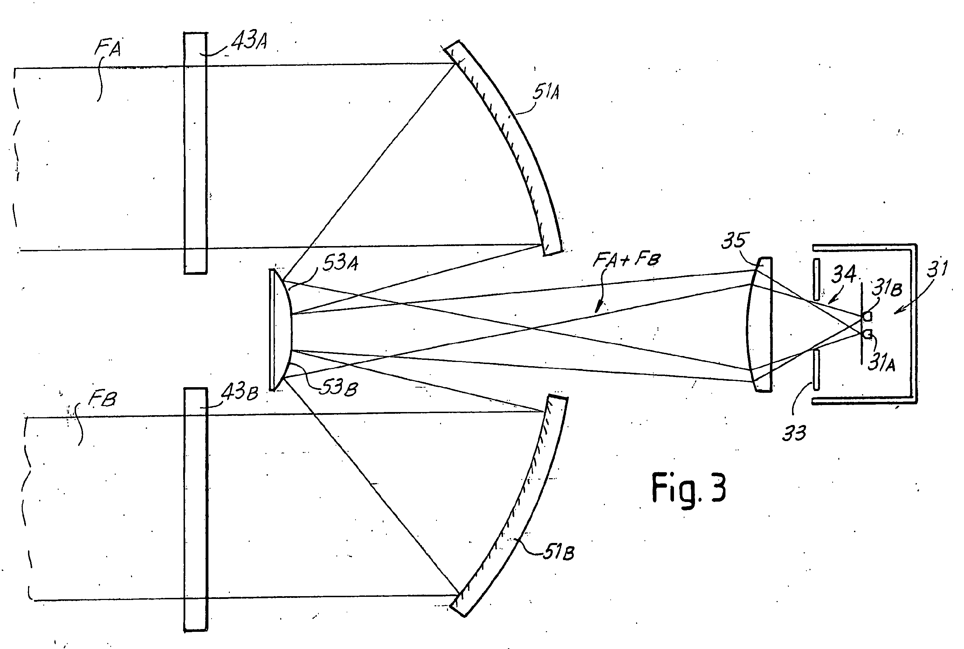

Figure 3 represents a different embodiment of the optics which convey the two separated optic beams towards the same common sensor, indicated again with 31, guaranteeing coincidence between the output pupils of the two beams and the cold shield 33 of the common sensor 31. The same numbers indicate the same or equivalent parts with respect to the configuration in Figure 2. Therefore, in the diagram in Figure 3, besides the common sensor 31 with its cold shield 33, the common focusing optics 35 and the two bandpass filters 43A and 43B are also shown. The assembly represented by the specular surfaces 47A, 47B, by the flat folding mirrors 41A, 41 B and by the lenses 39A, 39B and 45A, 45B is replaced in this case by an arrangement of two non-flat mirrors for each of the two separated beams F_{A}, F_{B}.

More specifically, a first converging concave mirror 51A is arranged along the path of the beam F_{A}, which focuses the beam F_{A} on a second diverging (i.e. convex) mirror 53A, while a mirror 51 B the same as the mirror 51A and a mirror 53B the same as the mirror 53A are arranged along the path of the beam F_{B}. In this way only reflecting optical elements are used, with the exception of the lens 35, increasing the output of the device, as there is a reduction in losses through absorption which always occur in the case of dioptric elements which work in transmission (such as the lenses 45A, 45B and 39A, 39B). Moreover, the overall number of optical elements along the optical path of each of the two beams F_{A}, F_{B} is reduced with respect to the configuration in Figure 2, as the mirrors 53A and 53B perform the function of elements with dioptric power and of optical combining element of the two separated beams F_{A}, F_{B} along a common length of path between the mirrors 53A, 53B and the focusing lens 35. In practice, the two mirrors 53A, 53B can be constituted by two reflecting portions of a single rigid element to facilitate adjustment of the device to place the output pupils of the two beams F_{A}, F_{B} on the plane of the cold shield 33 of the sensor 31. Moreover, the configuration using converging and diverging reflecting elements rather than dioptric elements (lenses) has a lower temperature variation of the focal point, as it is known that the refraction index of the lenses varies as a function of temperature.

In substance, a reflecting telescope is produced along the path of the two beams F_{A}, F_{B}, which can be produced according to one of the various configurations known per se, such as a Ritchey Chretien off-axis, Cassegrein or Schmidt-Cassegrein off-axis telescope.

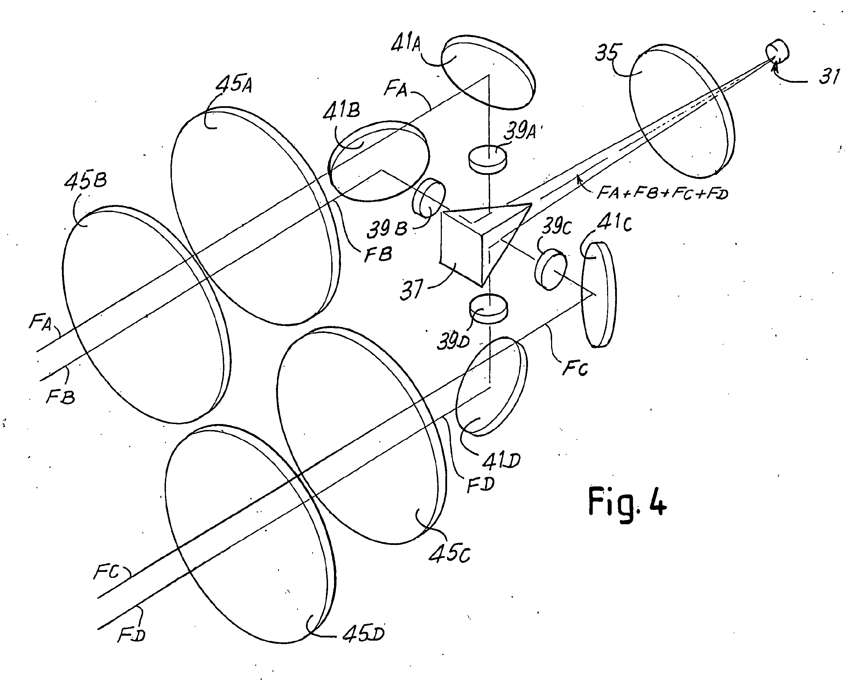

The concept on which the invention is based is not limited to the combination of only two beams in respective spectral bands on a same sensor. In fact, more than two distinct beams can also be conveyed on the same sensor 31. Figure 4 shows a perspective view of an embodiment of a device according to the diagram in Figure 2, in which four distinct separated optical beams, indicated here with F_{A}, F_{B}, F_{C} and F_{D}, are conveyed on the same common sensor 31. The components and the optical elements along the optical paths of the beams are indicated with the same reference numbers used in Figure 2 followed by the letters A, B, C and D respectively. A detailed description of the individual elements is unnecessary, as these simply represent a doubled arrangement with respect to the arrangement in Figure 2, with the difference that the roof prism, forming the combining element 37, with the two reflecting surfaces 37A, 37B forming a dihedral, is replaced by a combining element 37 in the form of a specular pyramid with a square base, the side surfaces of which receive and reflect the four separated beams F_{A}, F_{B}, F_{C} and F_{D} to be combined along the common path.

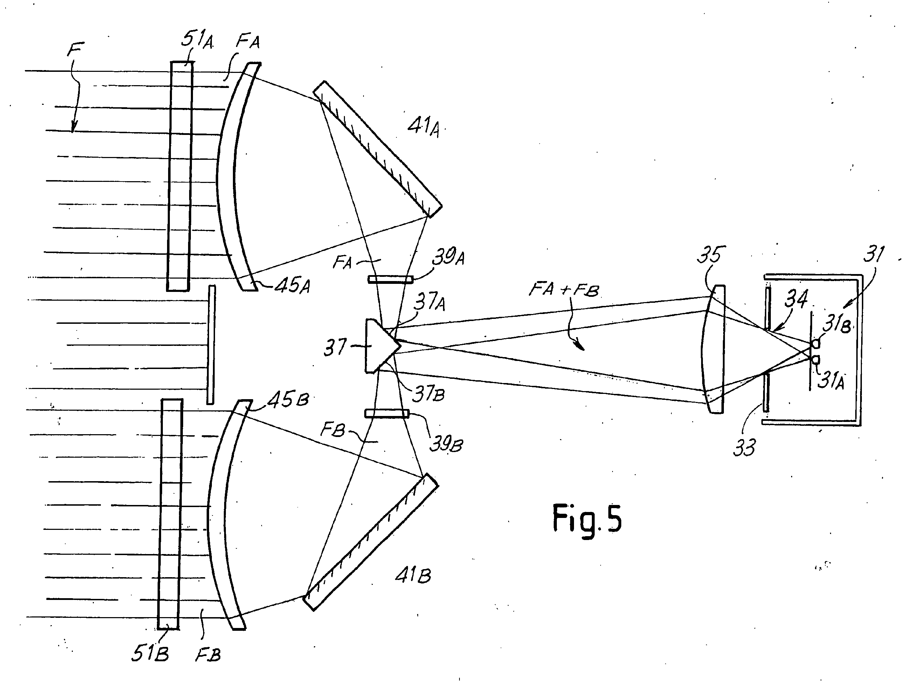

Figure 5 shows a different application of the invention. The same numbers indicate the same or equivalent parts to those in the diagram in Figure 2. In this case the device receives an input beam F which is divided into two separated beams F_{A}, F_{B} by means of two separator elements 51A, 51 B formed of two bandpass filters. Each of the two separated beams F_{A}, F_{B} is generated by filtering only a portion of the input beam F by means of a respective separator element, while in the cases illustrated previously each separated beam was generated by dividing the entire input beam into spectral bands. The arrangement of the optics downstream of the separator elements 51A, 51 B is essentially the same as described with reference to Figure 2. It must be understood that also in this configuration it would be possible to use a solution which utilizes reflecting rather than dioptric elements (Figure 3) and that the same concept of dividing the beam could be extended to more than two separated beams (as in Figure 4).

It is understood that the drawing only shows an example provided merely as a practical embodiment of the invention, which may vary in forms and arrangements. The invention is defined by the appended claims.

## Claims

1. An optoelectronic device to generate a plurality of spectral images in different bands of a same object, including: an beam input path; a plurality of band separator elements (5; 13; 25; 26; 27; 28; 29, 51B), which from the collimated input beam (F1) generate at least two beams (F_{A};F_{B}) separated into respective spectral bands; at least two optical paths for said separated beams; wherein each optical path includes: a collimated-beam portion, along said collimated-beam portion a respective band separator element (43A, 43B), and downstream of said band separator element a respective focusing optics (45A, 45B; 51A, 51 B); and wherein the focusing optics of said at least two optical paths converge said separated beams (F_{A}, F_{B}) on a combining optical element (37; 53A, 53B), which combines said separated beams along a common optical path portion towards a common focusing optical element (35), to converge said beams on a common sensor (31).

2. Device as claimed in claim 1, **characterized in that** said common sensor (31) includes a plurality of sensing elements (31A, 31B), the beams (F_{A}, F_{B}) conveyed on said common sensor (31) being focused by said common focusing optical element (35) on different sensing elements (31A, 31 B) for the different beams (F_{A}, F_{B}).

3. Device as claimed in claim 1 or 2, **characterized in that** said common sensor (31) on which said separated beams (F_{A}, F_{B}) converge is an infrared sensor.

4. Device as claimed in one or more of the previous claims, **characterized in that** the output pupils of the separated beams (F_{A}, F_{B}) converging on said common sensor (31) and coming from the combining optical element (37; 53A, 53B) lie on a same input plane (33) of the common sensor (35).

5. Device as claimed in claim 3, **characterized in that** the output pupils of the separated beams (F_{A}, F_{B}) converging on the common sensor (35) and coming from the combining optical element (37; 53A, 53B) lie on a cold shield of the common sensor (35).

6. Device as claimed in one or more of the previous claims, **characterized in that** said combining optical element (37; 53A, 53B) has a plurality of distinct surface portions (37A, 37B; 53A, 53B), incident on each of which is one of the separated beams (F_{A}, F_{B}) combined by said combining optical element.

7. Device as claimed in one or more of the previous claims, **characterized in that** said combining optical (53A, 53B) element is provided with a power.

8. Device as claimed in claim 7, **characterized in that** said combining optical element (53A, 53B) is a diverging element.

9. Device as claimed in one or more of the previous claims, **characterized in that** said combining optical element (53A, 53B) is a reflecting element.

10. Device as claimed in one or more of the previous claims, **characterized in that** said combining optical element (37; 53A, 53B) includes at least two complementary reflecting surfaces (37A, 37B; 53A; 53B, each receiving a respective one of said separated beams (F_{A}, F_{B}) and reflecting it towards said common focusing optical element (35).

11. Device as claimed in claim 9 or 10, **characterized in that** said combining optical element has convex reflecting surfaces (53A, 53B).

12. Device as claimed in claim 9 or 10**, characterized in that** said combining optical element (37) has flat reflecting surfaces (37A, 37B).

13. Device as claimed in claim 12, **characterized in that** said flat reflecting surfaces (37A, 37B) form a dihedral or a pyramid.

14. Device as claimed in one or more of the preceding claims, **characterized in that** said combining optical element (37; 53A, 53B) is adjustable to adjust the position of the output pupils of the separated beams reflected by said combining optical element (37; 53A, 53B).

15. Device as claimed in one or more of the preceding claims, **characterized in that** the focusing optics (45A, 45B; 51A, 51 B) of each of the separated beams (F_{A}, F_{B}) conveyed on said combining optical element (37; 53A, 53B) is associated with a diverging optical element (39A, 39B; 53A, 53B) arranged downstream said focusing optics.

16. Device as claimed in claim one or more of the previous claims, **characterized in that** each focusing optics (51A, 51 B) includes, for each separated beam (F_{A}, F_{B}), a converging mirror (51A, 51 B).

17. Device as claimed in one or more of the preceding claims, **characterized in that** each focusing optics includes, for each separated beam (F_{A}, F_{B}), a converging lens (45A, 45B).

18. Device as claimed in one or more of claims 15 to 17, **characterized in that** the input beam to each of said focusing optics (45A, 45B; 51A, 51 B) is a collimated beam (F_{A}, F_{B}).

19. Device as claimed in one or more of claims 15 to 18, **characterized in that** a bandpass filter (43A, 43B) is associated with each of said focusing optics (45A, 45B; 51A, 51 B).

20. Device as claimed in one or more of the previous claims, **characterized in that** said band separator elements include dichroic mirrors.

21. Device as claimed in one or more of the previous claims, **characterized in that** said separator elements include bandpass filters.

22. Device as claimed in one or more of the previous claims, **characterized in that** it includes a telescope (3), which receives a beam of electromagnetic radiation from the outside and conveys it towards the input optical path.

23. Device as claimed in one or more of the previous claims, **characterized in that** at least some of said separated beams are obtained by dividing the entire input beam into individual spectral bands.

24. Device as claimed in one or more of the previous claims, **characterized in that** at least some of said separated beams are obtained by dividing and filtering distinct portions of the cross section of the input beam.

25. Device as claimed in one or more of the previous claims, **characterized in that** it includes at least one optoelectronic sensor (19-21) operating in the visible wavelength range and which receives a single separated beam (F2, F4, F6, F7), and at least one common sensor (35), operating in the infrared wavelength range, with a cooling system and which receives at least two separated beams (F_{A}, F_{B}).

## Patentansprüche

1. Optoelektronisches Gerät zum Erzeugen einer Anzahl von Spektralbildern in unterschiedlichen Bandbreiten desselben Objektes mit: einem Eingangsstrahlengang; einer Anzahl von Bandtrennelementen (5; 13; 25; 26; 27; 28; 29; 51B), die aus dem parallelen Eingangsstrahl (F1) wenigstens zwei Strahlen (FA, FB) erzeugen, die in entsprechende Spektralbandbereiche getrennt sind; wenigstens zwei optischen Strahlengängen für die getrennten Strahlen; wobei jeder optische Strahlengang aufweist: einen Parallelstrahlteil, entlang diesem Parallelstrahlteil ein entsprechendes Bandtrennelement (43A, 43B), und im Strahlengang abwärts des Bandtrennelementes eine entsprechende Fokussieroptik (45A, 45B; 51A, 51B); und wobei die Fokussieroptiken der wenigstens zwei optischen Strahlengänge die getrennten Strahlen (F_{A}, F_{B}) auf einem kombinierenden optischen Element (37; 53A, 53B) konvergieren, welches die getrennten Strahlen entlang einem gemeinsam optischen Strahlengangteil auf ein gemeinsames optisches Fokussierelement (35) kombiniert, um die Strahlen auf einem gemeinsamen Sensor (31) zu konvergieren.

2. Gerät nach Anspruch 1, **dadurch gekennzeichnet, dass** der gemeinsame Sensor (31) eine Anzahl von Sensorelementen (31A, 31B) aufweist, wobei die auf den gemeinsamen Sensor (31) geleiteten Strahlen (F_{A}, F_{B}) durch das gemeinsame optische Fokussierelement (35) auf unterschiedliche Sensorelemente (31A, 31B) für die unterschiedlichen Strahlen (F_{A}, F_{B}) fokussiert werden.

3. Gerät nach Anspruch 1 oder 2, **dadurch gekennzeichnet, dass** der gemeinsame Sensor (31), auf welchem die getrennten Strahlen (F_{A}, F_{B}) konvergieren, ein Infrarotsensor ist.

4. Gerät nach einem oder mehreren der vorstehenden Ansprüche,
**dadurch gekennzeichnet, dass** die Ausgangspupillen der getrennten Strahlen (F_{A}, F_{B}), die auf dem gemeinsamen Sensor (31) konvergieren und von dem kombinierenden optischen Element (37; 53A, 53B) kommen, auf der gleichen Eingangsebene (33) des gemeinsamen Sensors (35) liegen.

5. Gerät nach Anspruch 3, **dadurch gekennzeichnet, dass** die Ausgangspupillen der getrennten Strahlen (F_{A}, F_{B}), die auf dem gemeinsamen Sensor (35) konvergieren und von dem kombinierenden optischen Element (37; 53A, 53B) kommen, auf einer kalten Abschirmung des gemeinsamen Sensors (35) liegen.

6. Gerät nach einem oder mehreren der vorstehenden Ansprüche,
**dadurch gekennzeichnet, dass** das kombinierende optische Element (37; 53A, 53B) eine Anzahl von verschiedenen Oberflächenteilen (37A, 37B; 53A, 53B) aufweist, wobei auf jeden von diesen einer der getrennten Strahlen (F_{A}, F_{B}), die durch das kombinierende optische Element kombiniert sind, auftrifft.

7. Gerät nach einem oder mehreren der vorstehenden Ansprüche,
**dadurch gekennzeichnet, dass** das kombinierende optische Element (53A, 53B) mit Energie gespeist wird.

8. Gerät nach Anspruch 7, **dadurch gekennzeichnet, dass** das kombinierende optische Element (53A, 53B) ein divergierendes Element ist.

9. Vorrichtung nach einem oder mehreren der vorstehenden Ansprüche,
**dadurch gekennzeichnet, dass** das kombinierende optische Element (53A, 53B) ein reflektierendes Element ist.

10. Gerät nach einem oder mehreren der vorstehenden Ansprüche,
**dadurch gekennzeichnet, dass** das kombinierende optische Element (37; 53A, 53B) wenigstens zwei komplementäre reflektierende Flächen (37A, 37B; 53A; 53B) aufweist, die jeweils einen entsprechenden der getrennten Strahlen (F_{A}, F_{B}) empfangen und diesen auf das gemeinsame optische Fokussierelement (35) reflektieren.

11. Gerät nach Anspruch 9 oder 10, **dadurch gekennzeichnet, dass** das kombinierende optische Element konvexe reflektierende Flächen (53A, 53B) hat.

12. Gerät nach Anspruch 9 oder 10, **dadurch gekennzeichnet, dass** das kombinierende optische Element (37) ebene reflektierende Flächen (37A, 37B) hat.

13. Gerät nach Anspruch 12, **dadurch gekennzeichnet, dass** die ebenen reflektierenden Flächen (37A, 37B) ein Dieder oder eine Pyramide bilden.

14. Gerät nach einem oder mehreren der vorstehenden Ansprüche,
**dadurch gekennzeichnet, dass** das kombinierende optische Element (37; 53A, 53B) einstellbar ist, um die Position der Ausgangspupillen der getrennten Strahlen, die von dem kombinierenden optischen Element (37; 53A, 53B) reflektiert werden, einzustellen.

15. Gerät nach einem oder mehreren der vorstehenden Ansprüche,
**dadurch gekennzeichnet, dass** die Fokussieroptiken (45A, 45B; 51A, 51B) jedes der getrennten Strahlen (F_{A}, F_{B}), die auf das kombinierende optische Element (37; 53A, 53B) gerichtet sind, mit einem zugehörigen divergierenden optischen Element (39A, 39B; 53A, 53B) versehen sind, das im Strahlengang abwärts der Fokussieroptik angeordnet ist.

16. Gerät nach einem oder mehreren der vorgehenden Ansprüche,
**dadurch gekennzeichnet, dass** jede Fokussieroptik (51A, 51B) für jeden getrennten Strahl (F_{A}, F_{B}) einen konvergierenden Spiegel (51A, 51B) aufweist.

17. Gerät nach einem oder mehreren der vorstehenden Ansprüche,
**dadurch gekennzeichnet, dass** jede Fokussieroptik für jeden getrennten Strahl (F_{A}, F_{B}) eine konvergierende Linse (45A, 45B) aufweist.

18. Gerät nach einem oder mehreren der Ansprüche 15 bis 17,
**dadurch gekennzeichnet, dass** der Eingangsstrahl jeder der Fokussieroptiken (45A, 45B; 51A, 51B) ein gebündelter Strahl (F_{A}, F_{B}) ist.

19. Gerät nach einem oder mehreren der Ansprüche 15 bis 18,
**dadurch gekennzeichnet, dass** jeder der Fokussieroptiken (45A, 45B; 51A, 51B) ein Bandpassfilter (43A, 43B) zugeordnet ist.

20. Gerät nach einem oder mehreren der vorstehenden Ansprüche,
**dadurch gekennzeichnet, dass** die Bandtrennelemente dichroische Spiegel enthalten.

21. Gerät nach einem oder mehreren der vorstehenden Ansprüche,
**dadurch gekennzeichnet, dass** die Trennelemente Bandpassfilter enthalten.

22. Gerät nach einem oder mehreren der vorstehenden Ansprüche,
**dadurch gekennzeichnet, dass** dieses ein Teleskop (3) enthält, welches einen Strahl elektromagnetischer Strahlung von außerhalb empfängt und diesen auf den optischen Eingangsstrahlengang richtet.

23. Gerät nach einem oder mehreren der vorstehenden Ansprüche,
**dadurch gekennzeichnet, dass** wenigstens einige der getrennten Strahlen durch Teilen des gesamten Eingangsstrahls in einzelne Spektralbandbereiche erhalten werden.

24. Gerät nach einem oder mehreren der vorstehenden Ansprüche,
**dadurch gekennzeichnet, dass** wenigstens einige der getrennten Strahlen durch Trennen und Filtern einzelner Teile des Querschnittes des Eingangsstrahls erzielt werden.

25. Gerät nach einem oder mehreren der vorstehenden Ansprüche,
**dadurch gekennzeichnet, dass** dieses wenigstens einen optoelektronischen Sensor (19-21) aufweist, der im sichtbaren Wellenlängenbereich arbeitet und der einen einzelnen getrennten Strahl (F2, F4, F6, F7) empfängt, und wenigstens einen gemeinsamen Sensor (35), der im Infrarotwellenlängenbereich arbeitet, mit einem Kühlsystem aufweist und der wenigstens zwei getrennte Strahlen (F_{A}, F_{B}) empfängt.

## Revendications

1. Dispositif optoélectronique pour générer une pluralité d'images spectrales dans des bandes différentes d'un même objet, comprenant : un passage d'entrée de faisceau ; une pluralité d'éléments séparateurs de bandes (5 ; 13 ; 25 ; 26 ; 27 ; 28 ; 29 ; 51B), qui à partir du faisceau d'entrée collimaté (F) génèrent au moins deux faisceaux (F_{A}, F_{B}) séparés dans des bandes spectrales respectives ; au moins deux passages optiques pour lesdits faisceaux séparés ; dans lequel chaque passage optique comprend : une partie de faisceau collimaté, le long de ladite partie de faisceau collimaté, un élément séparateur de bandes respectif (43A, 43B), et en aval dudit élément séparateur de bandes, des éléments optiques de concentration respectifs (45A, 45B ; 51A, 51B) ; et dans lequel les éléments optiques de concentration desdits au moins deux passages optiques font converger lesdits faisceaux séparés (F_{A}, F_{B}) sur un élément optique de combinaison (37 ; 53A, 53B), qui combine lesdits faisceaux séparés le long d'une partie de passage optique commune vers un élément optique de concentration commun (35), pour faire converger lesdits faisceaux sur un capteur commun (31).

2. Dispositif selon la revendication 1, **caractérisé en ce que** ledit capteur commun (31) comprend une pluralité d'éléments de détection (31A, 31B), les faisceaux (F_{A}, F_{B}) transportés sur ledit capteur commun (31) étant concentrés par ledit élément optique de concentration commun (35) sur différents éléments de détection (31A, 31B) pour les différents faisceaux (F_{A}, F_{B}).

3. Dispositif selon la revendication 1 ou 2, **caractérisé en ce que** ledit capteur commun (31) sur lequel lesdits faisceaux séparés (F_{A}, F_{B}) convergent est un capteur infrarouge.

4. Dispositif selon une ou plusieurs des revendications précédentes, **caractérisé en ce que** les pupilles de sortie des faisceaux séparés (F_{A}, F_{B}) convergeant sur ledit capteur commun (31) et provenant de l'élément optique de combinaison (37 ; 53A, 53B) se trouvent sur un même plan d'entrée (33) du capteur commun (35).

5. Dispositif selon la revendication 3, **caractérisé en ce que** les pupilles de sortie des faisceaux séparés (F_{A}, F_{B}) convergeant sur le capteur commun (35) et provenant de l'élément optique de combinaison (37 ; 53A, 53B) se trouvent sur un écran froid du capteur commun (35).

6. Dispositif selon une ou plusieurs des revendications précédentes, **caractérisé en ce que** ledit élément optique de combinaison (37 ; 53A, 53B) possède une pluralité de parties de surface distinctes (37A, 37B ; 53A, 53B), incident sur chacune desquelles est un des faisceaux séparés (F_{A}, F_{B}) combiné par ledit élément optique de combinaison.

7. Dispositif selon une ou plusieurs des revendications précédentes, **caractérisé en ce que** ledit élément optique de combinaison (53A, 53B) est alimenté en puissance.

8. Dispositif selon la revendication 7, **caractérisé en ce que** ledit élément optique de combinaison (53A, 53B) est un élément divergent.

9. Dispositif selon une ou plusieurs des revendications précédentes, **caractérisé en ce que** ledit élément optique de combinaison (53A, 53B) est un élément de réflexion.

10. Dispositif selon une ou plusieurs des revendications précédentes, **caractérisé en ce que** ledit élément optique de combinaison (37 ; 53A, 53B) comprend au moins deux surfaces réfléchissantes complémentaires (37A, 37B ; 53A, 53B), chacune recevant un faisceau respectif desdits faisceaux séparés (F_{A}, F_{B}) et le réfléchissant vers ledit élément optique de concentration commun (35).

11. Dispositif selon la revendication 9 ou 10, **caractérisé en ce que** ledit élément optique de combinaison possède des surfaces réfléchissantes convexes (53A, 53B).

12. Dispositif selon la revendication 9 ou 10, **caractérisé en ce que** ledit élément optique de combinaison (37) possède des surfaces réfléchissantes planes (37A, 37B).

13. Dispositif selon la revendication 12, **caractérisé en ce que** lesdites surfaces réfléchissantes planes (37A, 37B) forment un dièdre ou une pyramide.

14. Dispositif selon une ou plusieurs des revendications précédentes, **caractérisé en ce que** ledit élément optique de combinaison (37 ; 53A, 53B) est réglable pour régler la position des pupilles de sortie des faisceaux séparés réfléchis par ledit élément optique de combinaison (37 ; 53A, 53B).

15. Dispositif selon une ou plusieurs des revendications précédentes, **caractérisé en ce que** les éléments optiques de concentration (45A, 45B ; 51A, 51B) de chacun des faisceaux séparés (F_{A}, F_{B}) transportés sur ledit élément optique de combinaison (37 ; 53A, 53B) sont associés à un élément optique divergent (39A, 39B ; 53A, 53B) agencé en aval desdits éléments optiques de concentration.

16. Dispositif selon la revendication une ou plusieurs des revendications précédentes, **caractérisé en ce que** chaque élément optique de concentration (51A, 51B) comprend, pour chaque faisceau séparé (F_{A}, F_{B}), un miroir convergent (51A, 51B).

17. Dispositif selon une ou plusieurs des revendications précédentes, **caractérisé en ce que** chaque élément optique de concentration comprend, pour chaque faisceau séparé (F_{A}, F_{B}), une lentille convergente (45A, 45B).

18. Dispositif selon une ou plusieurs des revendications 15 à 17, **caractérisé en ce que** le faisceau d'entrée de chacun desdits éléments optiques de concentration (45A, 45B ; 51A, 51B) est un faisceau collimaté (F_{A}, F_{B}).

19. Dispositif selon une ou plusieurs des revendications 15 à 18, **caractérisé en ce qu'**un filtre passe-bande (43A, 43B) est associé à chacun desdits éléments optiques de concentration (45A, 45B ; 51A, 51B).

20. Dispositif selon une ou plusieurs des revendications précédentes, **caractérisé en ce que** lesdits éléments séparateurs de bandes comprennent des miroirs dichroïques.

21. Dispositif selon une ou plusieurs des revendications précédentes, **caractérisé en ce que** lesdits éléments séparateurs comprennent des filtres passe-bandes.

22. Dispositif selon une ou plusieurs des revendications précédentes, **caractérisé en ce qu'**il comprend un télescope (3), qui reçoit un faisceau de rayonnement électromagnétique à partir de l'extérieur et le transporte vers le passage optique d'entrée.

23. Dispositif selon une ou plusieurs des revendications précédentes, **caractérisé en ce qu'**au moins certains desdits faisceaux séparés sont obtenus en divisant le faisceau d'entrée entier en bandes spectrales individuelles.

24. Dispositif selon une ou plusieurs des revendications précédentes, **caractérisé en ce qu'**au moins certains desdits faisceaux séparés sont obtenus en divisant et filtrant des parties distinctes de la section transversale du faisceau d'entrée.

25. Dispositif selon une ou plusieurs des revendications précédentes, **caractérisé en ce qu'**il comprend au moins un capteur optoélectronique (19-21) fonctionnant dans la plage de longueur d'onde visible et qui reçoit un faisceau séparé unique (F2, F4, F6, F7), et au moins un capteur commun (35), fonctionnant dans la plage de longueur d'onde infrarouge, avec un système de refroidissement et qui reçoit au moins deux faisceaux séparés (F_{A}, F_{B}).
